# FASCICULE DE BREVET EUROPEEN

(11) **EP 0 870 638 B1**
(45) Date de publication et mention de la délivrance du brevet: **12.06.2002**
(21) Numéro de dépôt: 98106455.3
(22) Date de dépôt: 08.04.1998
(51) Int. Cl.: B60K 11/04

(54) **Boîte collectrice d'un échangeur de chaleur, notamment dans un véhicule automobile**
Sammelbehälter für einen Wärmetauscher, insbesondere in einem Kraftfahrzeug
Collecting box for a heat exchanger, especially in a motor vehicle

(30) Priorité: 09.04.1997 FR 9704341
(43) Date de publication de la demande: 14.10.1998
(73) Titulaire: VALEO THERMIQUE MOTEUR S.A., 78321 La Verrière (FR)
(72) Inventeur: Le Hegarat, Denis, 92376 Chaville (FR); Tordjeman, Jean Michel, 78310 Coignieres (FR)
(74) Mandataire: Plaçais, Jean-Yves

(56) Documents cités:
- EP-A- 0 263 732
- DE-A- 3 446 752

## Description

L'invention concerne le domaine des boîtes collectrices des échangeurs de chaleur, notamment dans des véhicules automobiles, et un procédé de réparation de telles boîtes.

Dans le cas, par exemple, d'un radiateur de refroidissement du moteur, il est connu de fixer une boîte collectrice de ce type au châssis du véhicule par au moins un pion de fixation qu'elle comprend.

A la suite d'un accident du véhicule ou même sur une chaîne de montage, un échangeur de chaleur peut subir un choc violent ou des vibrations importantes au niveau de ce(s) pion(s) de fixation faisant saillie. Il est fréquent alors que le corps de la boîte collectrice se casse ou se fêle, ce qui entraîne des fuites du fluide qu'elle contient. Dans ce cas, l'échangeur de chaleur est hors d'usage et doit être entièrement remplacé. Par contre, si la boîte collectrice se casse au niveau de son pion de fixation seulement, on peut procéder au remontage du même échangeur de chaleur sur le châssis, en remplaçant le pion de fixation cassé par de nouveaux moyens de fixation.

Cependant, les boîtes collectrices de ce type connues se rompent plus facilement au niveau de leur corps qu'au niveau de leur pion de fixation.

L'invention a notamment pour but de surmonter cet inconvénient.

Elle propose à cet effet, une boîte collectrice comportant une amorce de rupture privilégiée, de manière à imposer, en cas de choc, la rupture du pion de fixation à un endroit prédéterminé. Ainsi, le corps de la boîte collectrice est épargné.

Selon une caractéristique avantageuse de l'invention, l'amorce de rupture est contenue dans une surface plane, de sorte que le pion de fixation puisse se rompre sensiblement suivant cette surface plane. De plus, la boîte collectrice comprend au niveau de cette surface, un logement pour des moyens de fixation prévus pour remplacer le pion de fixation en cas de rupture de celui-ci.

Selon un mode de réalisation préféré de l'invention, la boîte collectrice comprend une embase plane sur laquelle le pion de fixation fait saillie, d'une seule pièce. Ce pion de fixation comprend un alésage axial, sensiblement cylindrique circulaire, qui se prolonge dans la boîte collectrice au delà de l'embase plane. Le rayon de l'alésage axial diminue de façon discontinue au niveau de l'embase plane pour y former l'amorce de rupture.

Avantageusement, le prolongement de l'alésage axial dans la boîte collectrice forme un logement pour d'éventuels nouveaux moyens de fixation.

L'invention prévoit d'ailleurs un procédé de réparation d'une boîte collectrice de ce type, après rupture du pion de fixation. On introduit à cet effet, une tige cylindrique circulaire que comprennent les nouveaux moyens de fixation, dans ledit logement. Ainsi ces moyens de fixation sont solidaires de la boîte collectrice. Ils peuvent être réalisés sous la forme d'un nouveau pion de fixation, solidaire de la tige cylindrique circulaire qui, dans un mode de réalisation préféré, est une tige filetée auto-taraudeuse.

Dans la description qui suit, faite à titre d'exemple, on se réfère aux dessins annexés, sur lesquels :
- la figure 1 est un schéma illustrant, en coupe transversale, une boîte collectrice selon l'invention avec son pion de fixation, et
- la figure 2 est un schéma illustrant, en coupe transversale, une boîte collectrice après rupture du pion de fixation, réparée par le procédé selon l'invention.

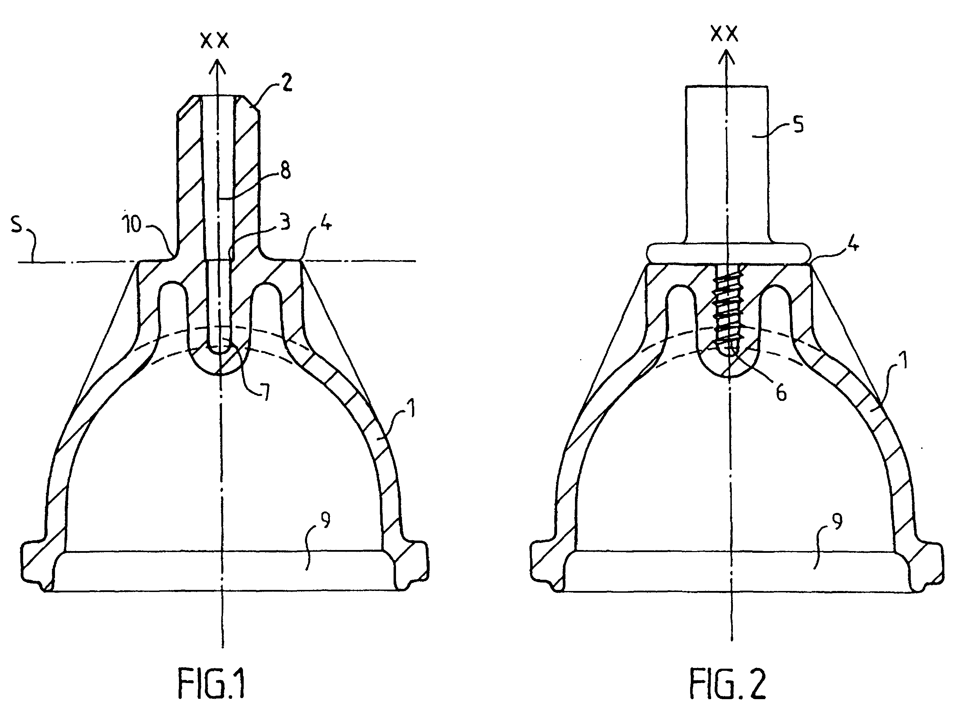

On se réfère tout d'abord à la figure 1 pour décrire la boîte collectrice suivant l'invention, dans un mode de réalisation préféré.

La boîte collectrice 1, représentée sur la figure 1, fait partie d'un échangeur de chaleur, par exemple un radiateur de refroidissement du moteur d'un véhicule automobile (non représenté sur les figures). Dans ce type d'installation, une telle boîte collectrice 1 permet d'alimenter avec un fluide de température choisie, le faisceau (non représenté) de tubes du radiateur, et/ou de collecter ce fluide.

Généralement, le faisceau de tubes est monté directement sur la partie inférieure 9 de la boîte collectrice 1. Ainsi, si celle-ci est détériorée (cassée ou fêlée au niveau de son corps 1), le radiateur doit être remplacé dans sa totalité. La boîte collectrice 1 comprend au moins un pion de fixation 2 pour immobiliser le radiateur sur le châssis du véhicule (non représenté).

Dans l'exemple, la boîte collectrice 1 comprend en outre, une embase plane 4 sur laquelle est moulé le pion de fixation 2 faisant saillie. Ce pion 2 comporte un alésage axial 8 d'axe XX, formant ainsi une partie sensiblement cylindrique circulaire creuse. L'axe XX est perpendiculaire à l'embase plane 4. La boîte collectrice 1 peut, par exemple, être réalisée dans une matière synthétique (plastique en général).

Selon l'invention, l'alésage axial 8 se prolonge au delà de l'embase plane 4 et son rayon diminue de façon discontinue au niveau de cette embase 4. On crée par cette discontinuité, une amorce de rupture privilégiée du pion de fixation 2 en un endroit 3 proche de l'embase 4.

Ainsi, en cas de choc sur le pion de fixation 2, le pion 2 se détache plus facilement que le corps 1 de la boîte collectrice ne se casse.

Après rupture du pion 2, il subsiste alors une surface sensiblement plane S sur l'embase 4. Le prolongement 7 de l'alésage axial 8 dans la boîte collectrice 1, comporte une ouverture débouchant sur cette surface plane S. Selon l'invention, ce prolongement 7 permet de recevoir, comme le montre la figure 2, la tige filetée 6 par exemple, d'un pion de rechange 5 prévu pour remplacer le pion cassé 2. Ainsi, ce pion de rechange 5 est solidaire de la boîte collectrice 1, et repose sur une surface plane S. Préférentiellement, la tige filetée 6 est auto-taraudeuse.

Dans la description précédente donnée à titre d'exemple, l'amorce de rupture privilégiée est formée par la discontinuité du rayon de l'alésage axial 8. Mais il est possible aussi de former cette amorce de rupture par une indentation circulaire sur la surface externe et/ou interne du pion de fixation 2 au niveau de l'embase plane 4.

On pourrait également supprimer l'arrondi 10 entre le pion de fixation 2 et l'embase plane 4, représenté sur la figure 1, selon un mode de réalisation différent.

## Revendications

1. Boîte collectrice (1) d'un échangeur de chaleur, notamment dans un véhicule automobile comprenant au moins un pion de fixation (2) et comportant une amorce de rupture privilégiée de manière à imposer, en cas de choc, la rupture du pion de fixation (2) à un endroit prédéterminé (3),
**caractérisée en ce qu'**elle comprend un logement (7) pour des moyens de fixation (5, 6) prévus pour remplacer le pion de fixation (2) en cas de rupture de celui-ci (2).

2. Boîte collectrice (1) selon la revendication 1, **caractérisée en ce que** l'amorce de rupture est contenue dans une surface plane (S), de sorte que le pion de fixation (2) soit propre à se rompre sensiblement suivant ladite surface plane (S).

3. Boîte collectrice (1) selon l'une des revendications précédentes, **caractérisée en ce qu'**elle comprend un logement (7) pour des moyens de fixation (5,6) prévus pour remplacer le pion de fixation (2) en cas de rupture de celui-ci (2).

4. Boîte collectrice (1) selon la revendication 2 en combinaison avec la revendication 3, **caractérisée en ce que** le logement (7) comprend une ouverture débouchant au niveau de ladite surface plane (S).

5. Boîte collectrice (1) selon l'une des revendications précédentes, **caractérisée en ce qu'**elle comprend une embase plane (4) sur laquelle le pion de fixation (2) fait saillie, d'une seule pièce.

6. Boîte collectrice (1) selon l'une des revendications précédentes, **caractérisée en ce que** le pion de fixation (2) comprend un alésage axial (8), sensiblement cylindrique circulaire.

7. Boîte collectrice (1) selon la revendication 5 en combinaison avec la revendication 6, **caractérisée en ce que** l'alésage axial (8) se prolonge dans la boîte collectrice (1) au delà de l'embase plane (4).

8. Boîte collectrice (1) selon la revendication 7, **caractérisée en ce que** le rayon de l'alésage axial (8) diminue de façon discontinue au niveau de l'embase plane (4) pour former ladite amorce de rupture.

9. Boîte collectrice (1) selon la revendication 5 en combinaison avec l'une des revendications 6 à 8, **caractérisée en ce que** l'alésage cylindrique (8) du pion de fixation (2) est d'axe (XX) perpendiculaire à l'embase plane (4).

10. Boîte collectrice selon l'une des revendications 7 à 9 en combinaison avec la revendication 3, **caractérisée en ce que** le prolongement de l'alésage axial (8) dans la boîte collectrice (1) forme ledit logement (7).

11. Procédé de réparation d'une boîte collectrice (1) selon la revendication 10 **caractérisé en ce qu'**après rupture du pion de fixation (2), suivant lequel on introduit dans ledit logement (7) une tige cylindrique circulaire (6) appartenant à des moyens de fixation de substitution (5,6), de sorte que lesdits moyens de fixation (5,6) soient solidaires de la boîte collectrice (1).

12. Procédé de réparation selon la revendication 11, **caractérisé en ce que** les moyens de fixation (5,6) sont réalisés sous la forme d'un nouveau pion de fixation (5) solidaire de la tige cylindrique circulaire (6).

13. Procédé de réparation selon l'une des revendications 11 et 12, **caractérisé en ce que** la tige cylindrique circulaire (6) est une tige filetée auto-taraudeuse.

## Claims

1. A header (1) for a heat exchanger, especially in a motor vehicle, including at least one fastening post (2) and having a rupturable weakening means adapted so that, in the event of a crash, it causes the fastening post (2) to rupture at a predetermined location (3), **characterised in that** it includes a housing (7) for a securing means (5, 6), to replace the fastening post (2) in the event of rupture of the latter (2).

2. A header (1) according to Claim 1, **characterised in that** the rupturable weakening means is contained in a flat surface (S), such that the fastening post (2) is thereby adapted to fracture substantially in the said flat surface (S).

3. A header (1) according to one of the preceding Claims, **characterised in that** it includes a housing (7) for a securing means (5, 6), to replace the fastening post (2) in the event of rupture of the latter (2).

4. A header (1) according to Claim 2 in combination with Claim 3, **characterised in that** the housing (7) includes an aperture open at the level of the said flat surface (S).

5. A header (1) according to one of the preceding Claims, **characterised in that** it includes a flat base element (4) from which the fastening post (2), integral therewith, projects.

6. A header (1) according to one of the preceding Claims, **characterised in that** the fastening post (2) has a substantially cylindrical circular axial bore (8).

7. A header (1) according to Claim 5 in combination with Claim 6, **characterised in that** the axial bore (8) is extended into the header (1) beyond the flat base element (4).

8. A header (1) according to Claim 7, **characterised in that** the radius of the axial bore (8) is discontinuously reduced at the level of the flat base element (4), thereby defining the said rupturable weakening means.

9. A header (1) according to Claim 5 in combination with one of Claims 6 to 8, **characterised in that** the cylindrical bore (8) of the fastening post (2) has an axis (XX) at right angles to the flat base element (4).

10. A header according to one of Claims 7 to 9 in combination with Claim 3, **characterised in that** the extension of the axial bore (8) into the header (1) constitutes the said housing (7).

11. A method of repairing a header (1) according to Claim 10, **characterised in that**, following rupture of the fastening post (2), a circular cylindrical rod (6), which is part of a replacement fastening means (5, 6), is introduced into the said housing (7) in such a way that the said fastening means (5, 6) are secured to the header (1).

12. A method of repair according to Claim 11, **characterised in that** the fastening means (5, 6) are made in the form of a new fastening post (5) fixed to the circular cylindrical rod (6).

13. A method of repair according to Claim 11 or Claim 12, **characterised in that** the circular cylindrical rod (6) is a self-tapping threaded rod.

## Patentansprüche

1. Sammelkasten (1) eines Wärmetauschers, insbesondere in einem Kraftfahrzeug, der wenigstens einen Befestigungsstift (2) umfaßt und eine Sollbruchstelle aufweist, so daß der Befestigungsstift (2) im Falle eines Stoßes notwendigerweise an einer vorbestimmten Stelle (3) bricht,
**dadurch gekennzeichnet, daß** er eine Aufnahme (7) für Befestigungsmittel (5, 6) aufweist, die vorgesehen sind, um im Falle eines Bruches des Befestigungsstiftes (2) diesen (2) zu ersetzen.

2. Sammelkasten (1) nach Anspruch 1, **dadurch gekennzeichnet, daß** die Sollbruchstelle in einer ebenen Fläche (S) liegt, so daß der Befestigungsstift (2) im wesentlichen entlang der ebenen Fläche (S) bricht.

3. Sammelkasten (1) nach einem der vorstehenden Ansprüche, **dadurch gekennzeichnet, daß** er eine Aufnahme (7) für Befestigungsmittel (5, 6) aufweist, die vorgesehen sind, um im Falle eines Bruches des Befestigungsstiftes (2) diesen (2) zu ersetzen.

4. Sammelkasten (1) nach Anspruch 2 in Kombination mit Anspruch 3, **dadurch gekennzeichnet, daß** die Aufnahme (7) eine Öffnung aufweist, die auf Höhe der ebenen Fläche (S) mündet.

5. Sammelkasten (1) nach einem der vorstehenden Ansprüche, **dadurch gekennzeichnet, daß** er eine ebene Sitzfläche (4) aufweist, auf der der Befestigungsstift (2) einstückig hervorsteht.

6. Sammelkasten (1) nach einem der vorstehenden Ansprüche, **dadurch gekennzeichnet, daß** der Befestigungsstift (2) eine axiale, im wesentlichen kreiszylindrische Bohrung (8) aufweist.

7. Sammelkasten (1) Anspruch 5 in Kombination mit Anspruch 6, **dadurch gekennzeichnet, daß** sich die axiale Bohrung (8) über die ebene Sitzfläche (4) hinaus in dem Sammelkasten (1) fortsetzt.

8. Sammelkasten (1) nach Anspruch 7, **dadurch gekennzeichnet, daß** sich der Radius der axialen Bohrung (8) an der ebenen Sitzfläche (4) diskontinuierlich verringert, um die Sollbruchstelle zu bilden.

9. Sammelkasten (1) nach Anspruch 5 in Kombination mit einem der Ansprüche 6 bis 8, **dadurch gekennzeichnet, daß** die zylindrische Bohrung (8) des Befestigungsstiftes (2) eine Achse (XX) aufweist, die senkrecht zur Sitzfläche (4) ist.

10. Sammelkasten (1) nach einem der Ansprüche 7 bis 9 in Kombination mit Anspruch 3, **dadurch gekennzeichnet, daß** die Fortsetzung der axialen Bohrung (8) in dem Sammelkasten (1) die Aufnahme (7) bildet.

11. Reparaturverfahren für einen Sammelkasten (1) nach Anspruch 10, **dadurch gekennzeichnet, daß** nach dem Bruch des Befestigungsstiftes (2) eine kreiszylindrische Stange (6) in die Aufnahme (7) eingeführt wird, die zu Ersatzbefestigungsmitteln (5, 6) gehört, so daß die Befestigungsmittel (5, 6) fest mit dem Sammelkasten (1) verbunden sind.

12. Reparaturverfahren nach Anspruch 11, **dadurch gekennzeichnet, daß** die Befestigungsmittel (5, 6) in Form eines neuen Befestigungsstiftes (5) ausgeführt sind, der fest mit der kreiszylindrischen Stange (6) verbunden ist.

13. Reparaturverfahren nach einem der Ansprüche 11 und 12, **dadurch gekennzeichnet, daß** die kreiszylindrische Stange (6) eine Stange mit selbstschneidendem Gewinde ist.
